# EUROPEAN PATENT SPECIFICATION

(11) **EP 3 820 717 B1**
(45) Date of publication and mention of the grant of the patent: **02.08.2023**
(21) Application number: 19756246.5
(22) Date of filing: 26.06.2019
(51) Int. Cl.: B60C 11/03, B60C 11/16

(54) **STUDDED TYRE FOR VEHICLE WHEELS**
SPIKEREIFEN FÜR FAHRZEUGRÄDER
PNEU A CLOU POUR ROUES DE VEHICULE

(30) Priority: 13.07.2018 IT 201800007203
(43) Date of publication of application: 19.05.2021
(73) Proprietor: Pirelli Tyre S.p.A., 20126 Milano (IT)
(72) Inventor: CASAROTTO, Giovanni, 20126 Milano (IT); SPEZIARI, Diego Ettore, 20126 Milano (IT); BOLZONI, Roberto, 20126 Milano (IT); BELLUZZO, Damiano Leonardo, 20126 Milano (IT)
(74) Representative: Susanetto, Carlo
(86) International application number: PCT/IB2019/055395
(87) International publication number: WO 2020/012282

(56) References cited:
- WO-A1-2014/115052
- WO-A1-2014/118659
- JP-A- 2007 050 718

## Description

The present invention relates to a studded tyre for vehicle wheels.

A tyre generally comprises a carcass structure shaped toroidally about an axis of rotation and including at least one carcass ply having end strips engaged in respective annular anchoring structures, known as bead cores.

In a position radially external to the carcass structure, a belt structure is provided comprising, in the case of car tyres, at least two radially superposed strips of rubberised fabric provided with reinforcing cords, usually metal, arranged mutually parallel in each strip but crossed with the cords of the adjacent strip, preferably symmetrically about the equatorial plane of the tyre.

Preferably, the belt structure further comprises, in a radially external position, at least on the ends of the underlying belt strips, another, third layer of textile or metal cords, arranged circumferentially (at 0 degrees). In tubeless tyres, a radially internal layer, called a "liner", is further present, and has features of impermeability to ensure air-tightness at the tyre itself.

In a positon radially external to the belt structure, a tread band made of elastomeric material is applied, on which a tread surface intended for contact with the road surface is defined.

To guarantee suitable road-holding on a wet road surface, tyres have a tread band provided with grooves of various shapes and geometries which delimit portions of tread band intended for contact with the ground, known as blocks.

The main function of the grooves is to make it possible to evacuate water present between the surface of the tyre and the road surface at the moment of mutual contact, preventing the hydrostatic pressure which results from the impact of the water against the travelling tyre from being able to cause even partial lifting of the tyre from the road surface with a resulting loss of control of the vehicle.

The overall configuration of the tread band defined by the set of grooves and blocks forms the tread pattern.

This is typically formed by repetition, in continuous succession along the entire circumferential progression of the tread band, of the same base module.

In winter tyres, small notches known as "sipes", extending from the tread surface of the tyre towards the inside of the block, are further formed on the blocks of the tread band. The function of the sipes is to offer further grip elements in the case of travel on snowy ground and to retain some amount of snow, thus improving the adherence to the road surface.

Further, in some winter tyres, studs are arranged on the blocks of the tread band and, as a result of a portion (pin) thereof projecting from the tread surface, improve the grip features of the tyre on the icy road surface.

Examples of studded tyres according to the prior art are disclosed in WO 2014/115052, in WO 2014/118659 and in JP 2007050718. From document WO2014/115052 a tyre with a tread portion of uneven stud distribution can be derived. Said document further shows a tread band build from a plurality of modules which extends between opposite axial ends of said tread portion and which are repeated in succession over the entire circumferential extent of said tread band to form the whole tread band, each module comprises a first and a second portion of said tread band, which extend between said axial ends of the tread band and are arranged in the same succession within each module, each of said first and second portions extending independently in a circumferential direction by an extent which corresponds to a long pitch or by an extent which corresponds to a short pitch which is less than said long pitch, each module is divided by said equatorial plane into a first region, which extends from said equatorial plane up to said first lateral edge, and a second region which extends from said equatorial plane up to said second lateral edge. The studs are arranged so as to be mutually misaligned with respect to an axial direction, perpendicular to said equatorial plane.

The Applicant has observed that the performance of a studded tyre, in terms of road-holding (meaning both the acceleration and braking period and the turning period), in terms of noise, and in terms of wear on the road surface, are highly dependent on the number and arrangement of the studs on the tread band.

In particular, the Applicant found that to achieve uniform, consistent performance on icy ground it is desirable to have as constant a number of studs as possible in the footprint area during the rolling of the tyre on the road surface. Further, the Applicant found that to achieve noise values for the tyre which are as low as possible the studs have to be arranged on the tread band in such a way that the striking of the studs on the road surface produces a noise distributed over as wide a frequency spectrum as possible, so as to prevent intensity peaks at particular frequencies.

The Applicant thus recognised the need to implement a studded tyre in which the studs were arranged on the tyre tread so as to meet all the requirements set out above.

However, the Applicant observed that the responses to said requirements, considered individually, may conflict with one another, making it necessary to balance appropriately the different variables involved so as to reach an optimum configuration of the features of the tyre.

In particular, the Applicant found that this balancing becomes more difficult when the number of studs to be arranged on the tread band is particularly high, for example when there are more than 150 studs.

The Applicant finally found that the best possible balance of the aforementioned requirements is provided by a studded tyre comprising a relatively high fraction of modules in which the studs are arranged in equal numbers on one side and the other side of the equatorial plane but mutually misaligned with respect to an axial direction of the tyre, and in which the studs arranged on one side of the equatorial plane are positioned in different adjacent modules or sub-modules from the modules or sub-modules in which the homologous studs arranged on the other side of the equatorial plane are positioned.

In particular, in a first aspect thereof, the invention relates to a tyre for vehicle wheels according to claim 1.

As a result of the aforementioned features, a studded tyre is obtained which can offer excellent performance in terms of road performance and in terms of noise.

Indeed, providing a high fraction of modules having evenly distributed studs in the first and in the second region means that the tyre has a substantially constant number of studs in the footprint area during the rolling movement of the tyre.

At the same time, said studs are distributed on the two regions of the tread band in a misaligned manner with respect to the axial direction, in such a way that they touch the road surface at different times, achieving a noise substantially free of intensity peaks and distributed over a wide frequency spectrum.

In particular, if the module is formed by at least two elementary portions, which may have a long or a short pitch, a significant fraction of first modules are provided in which the studs belonging to the same pair of homologous studs are arranged on different elementary portions. This precaution advantageously makes it possible to improve the performance of the tyre significantly in terms of noise, since the frequencies associated with the elementary portions are also better distributed.

In a second aspect thereof, the invention further relates to a tyre for vehicle wheels according to claim 11.

The studded tyres implemented in accordance with this second aspect of the invention share the same inventive solution and make it possible to achieve the same advantageous effects as the tyres implemented in accordance with the first aspect, with the difference that the features originally based on individual modules are now based on groups of adjacent modules. These groups of modules are mutually homogeneous, within the meaning that they always comprise the same number of adjacent modules. Preferably, each group of adjacent modules is formed by two or three adjacent modules.

Preferably, these modules are free of "sub-modules" (being what are known as "single-pitch" modules).

The term "equatorial plane" of the tyre is intended to mean a plane perpendicular to the axis of rotation of the tyre and subdividing the tyre into two equal parts. The "circumferential" direction is intended to mean a direction generally pointing along the direction of rotation of the tyre or at most slightly inclined (at most by approximately 5°) with respect to the direction of rotation of the tyre.

The "axial" direction is intended to mean a direction substantially parallel to the axis of rotation of the tyre or at most slightly inclined (at most by approximately 5°) with respect to this axis of rotation of the tyre. The axial direction is generally perpendicular to the circumferential direction.

The term "effective width" in reference to the tread band is intended to mean the width of the radially outermost portion of the tread band (from edge to edge) intended for contact with the ground.

The "central region" of the tread band is intended to mean a portion of tread band extending circumferentially about an equatorial plane of said tyre for a width equal to at least 30% of the effective width of the tread band, preferably for a width of between 40% and 60% of this effective width.

The central region may extend more or less symmetrically about the equatorial plane.

In particular, when circumferential or quasi-circumferential grooves are formed on the tread band, the central region may be delimited from one or both sides by one of said circumferential grooves.

The "shoulder regions" of the tread band are intended to mean the portions of tread band extending circumferentially on opposite sides of the central region in an axially external position of the tread band.

Preferably, each shoulder region extends for a width equal to at least 10% of the effective width of the tread band.

The term "groove" is intended to mean a recess formed in a tread band portion having a width greater than or equal to 1.5 mm and preferably a depth greater than 3 mm.

A groove is referred to as "circumferential" if it extends in a circumferential direction or at most is inclined by an angle less than 5° with respect to the circumferential direction.

A groove is referred to as "transverse" if it extends in a direction inclined with respect to the circumferential direction by an acute angle greater than at least 10°.

The term "sipe" is intended to mean a recess formed in a tread band portion having a width less than 1.5 mm, preferably less than or equal to 1 mm.

The width of sipes and grooves is understood to be measured at a depth greater than or equal to 1 mm, preferably greater than or equal to 1.5 mm.

If the width of the groove or sipe varies along the longitudinal progression thereof, the mean width is considered, the value of which is obtained as a mean of the different width values suitably weighted as a function of the relative longitudinal extensions. For example, if a groove has a width of 5 mm for 80% of the longitudinal extension thereof and a width of 3 mm for the remaining 20%, the mean value of the width to be considered will be 5 × 0.8 + 3 × 0.2 = 4.6 mm.

Analogously, if the width of a groove, in particular of a transverse groove, varies along the tread band as a function of the width of the pitch to which it belongs, the mean value is considered.

An end of a groove is defined as "blind" if it is not open to another groove.

The inclination of a transverse groove with respect to a circumferential direction identified on the tread band is defined by the acute angle formed by the groove with the circumferential direction. As a particular case, a transverse groove extending parallel to the axis of the tyre will have a 90° inclination to the circumferential direction.

Two (or more) transverse grooves are inclined "in a concordant manner" if the progression thereof is increasing or decreasing for both when considered over a Cartesian plane positioned on the tread band (tangentially thereto) with the y-axis parallel to the circumferential direction and the x-axis parallel to the tyre axis.

Therefore, two transverse grooves are inclined "in a discordant manner" if the progression thereof is increasing for one groove and decreasing for the other groove when considered in this Cartesian plane.

A groove has a "generally decreasing" inclination from a first region towards a second region if:
- for segments equal to at least 50% of the longitudinal extension of the groove between the first and second region the inclination of the groove decreases when going from the first towards the second region, and
- for segments equal to at least 80% of the longitudinal extension of the groove between the first and second region the inclination of the groove does not increase when going from the first towards the second region.

Two segments of groove (or two grooves) are "substantially aligned" if the longitudinal axes thereof, at least at the respective mutually facing ends thereof, are offset by a value less than the width thereof (the greater width being considered for segments of different width).

Two grooves are "successive" if they are arranged one following the other on the tread surface, considering the rotation of the tyre in either of the two directions of rotation. In particular, two grooves of the same type are successive if no other grooves of this type are provided between them.

The "tread pattern" means the overall configuration of the tread band as defined by the set of grooves and blocks delimited by said grooves.

A "module" of the tread pattern is defined by the minimum portion of tread band of which the configuration is repeated in succession along the circumferential progression of the tread band to form said tread pattern.

A module extends between the axial ends of the tread band.

Further, while maintaining an identical base configuration, the modules may have a slightly different circumferential dimension (known as "pitch") from one another; for example, modules having two, three or four different pitches, variously combined with one another, may be used on a tyre tread.

A module may be formed by two or more elementary portions (or sub-modules) extending between the two axial ends of the tread band and arranged in the same succession within each module.

In this case, it is provided that each elementary portion may have, in different modules, the same base configuration but slightly different circumferential dimensions (or "pitches") from one another, in such a way that each module can be formed by elementary portions of different pitch.

For example, if a module is formed by two elementary portions, each of which may have two different circumferential dimensions (a "long pitch" and a "short pitch"), four different types of modules will be possible, a first type having both elementary portions having long pitch, a second type having the first elementary portion having long pitch and the second elementary portion having short pitch, a third type having the first elementary portion having short pitch and the second elementary portion having long pitch, and finally a fourth type having both elementary portions having short pitch.

The modules having two elementary portions are also known as "two-pitch modules", whilst the modules which do not comprise at least two elementary portions (or in other words modules which comprise a single sub-module identical to the module) are also known as "single-pitch modules".

The long pitch has a circumferential dimension of at least 10% greater extension than the short pitch.

The "footprint area" means the tread band portion instantaneously in contact with the road surface during the rotation of the tyre. In real conditions, the footprint area is a function of various parameters, including the inflation pressure of the tyre, the load to which it is subjected, the road surface and the driving conditions, for which reference values may however be defined.

The present invention, in at least one of the aforementioned aspects, may have at least one of the further preferred features set out hereinafter.

In a first embodiment, in at least 10% of said first modules each pair of homologous studs comprises a stud provided on said first elementary portion and the other stud provided on said second elementary portion.

In this way, the width of the frequency spectrum over which the noise generated by the studded tyre is distributed is further increased, reducing the overall intensity thereof.

In one embodiment, for each first module, if both the studs of said pair of homologous studs are provided on one of said first and second elementary portions, said studs are positioned at different distances from said equatorial plane.

In a preferred embodiment, there is defined in said first modules a first pair of homologous studs which is formed by a first internal stud, which is defined as the stud provided in said first region nearest said equatorial plane, and by a second internal stud, which is defined as the stud provided in said second region nearest said equatorial plane, and wherein said first internal stud is spaced apart from said equatorial plane by a different extent from said second internal stud.

In this way, the degree of wear of the road pavement brought about by the eroding action of the stud on an only partially icy or even ice-free road surface is reduced.

Indeed, the Applicant has verified that the studs nearer the equatorial plane bring about greater erosion than the studs nearer the shoulder region.

Preferably, in said first modules, all the studs provided in said first region are positioned at different distances from said equatorial plane with respect to the studs provided in said second region.

In this way, a more uniform distribution of the studs over the entire width of the module is achieved.

Preferably, in said first modules, there are more than two studs provided in said first region.

More preferably, there are 3 studs provided in said first region.

In this way, it is possible to provide a high number of studs, in particular more than 150, for example 190 studs, on the tread band.

Preferably, there are formed on said tread band a plurality of central blocks through which said equatorial plane extends and, in said first modules, only one of said first internal stud and said second internal stud is provided on said central blocks.

In this way, the number of studs present in the central region of the tread band is minimised, and advantageously so is the level of wear of the road surface brought about by the studded tyre.

Preferably, said first modules are at least 50% of the total of said modules, and even more preferably said first modules are at least 65% of the total of said modules.

Preferably, in said first modules, the total number of the studs which are provided in said first region and in said second region is constant and equal to a predefined number.

Preferably, said predefined number is 6.

Preferably, in the modules in which the number of studs provided in said first region of said first module is not equal to the number of studs provided in said second region, there is provided a number of studs equal to said predefined number increased or decreased by one.

As a result of this feature, it is possible to adapt the number of studs provided on a module to the circumferential dimension thereof, in other words to the length of the pitch of said module.

In particular, it is preferred that in long-pitch modules (or in sequences of consecutive long-pitch modules) a number of studs greater than the predefined number may be provided and in short-pitch modules (or in sequences of consecutive short-pitch modules) a number of studs less than the predefined number may be provided.

In this way, in particular the constancy of the number of studs in the footprint area during the rolling movement of the tyre is increased.

Preferably, there is identified in each of said first groups of adjacent modules a first pair of homologous studs, formed by a first internal stud, which is defined as the stud provided in said first region nearest said equatorial plane, and a second internal stud, which is defined as the stud provided in said second region nearest said equatorial plane, and wherein said first internal stud is spaced apart from said equatorial plane by a different extent from said second internal stud.

Preferably, each of said first groups of adjacent modules is formed by two adjacent modules.

Preferably, in each of said first groups of adjacent modules, all the studs provided in said first region are positioned at different distances from said equatorial plane with respect to the studs provided in said second region.

Preferably, said first groups of modules are at least 50% of the total of said modules, and even more preferably said first groups of modules are at least 65% of the total of said modules.

Preferably, at least 150 studs are provided on said tread band.

More preferably, at least 190 studs are provided on said tread band.

In a third aspect thereof, the present invention relates to a studded tyre comprising a tread band which extends between a first lateral edge and a second lateral edge, which are axially opposite each other, an equatorial plane extending through said tread band, respective pluralities of grooves and blocks which collectively define a tread pattern of said tyre being formed on said tread band, wherein:
- there is identified in said tread pattern at least one module which is repeated in succession over the entire circumferential extent of said tread band,
- each module is divided by said equatorial plane into a first region, which extends from said equatorial plane up to said first lateral edge, and a second region, which extends from said equatorial plane up to said second lateral edge,
- there is identified among said modules a plurality of first modules, which comprise at least 40% of the total of said modules and in which the number of studs provided in said first region is equal to the number of studs provided in said second region of said first module,
- each module comprises a first and a second elementary portion of tread band, each of said first and second elementary portions extending independently in a circumferential direction by an extent which corresponds to a long pitch or by an extent which corresponds to a short pitch which is less than said long pitch,
and wherein:
- in each module, there is defined between the studs of said first region a first ranking of distance of the studs from said equatorial plane,
- in each module, there is defined between the studs of said second region a second ranking of distance of the studs from said equatorial plane,
- at least 40% of said modules comprise at least two studs having mutually consecutive positions within said first ranking or said second ranking, which are provided one on said first elementary portion and the other on said second elementary portion.

In a fourth aspect thereof, the present invention relates to a studded tyre comprising a tread band which extends between a first lateral edge and a second lateral edge, which are axially opposite each other, an equatorial plane extending through said tread band, respective pluralities of grooves and blocks which collectively define a tread pattern of said tyre being formed on said tread band, wherein:
- there is identified in said tread pattern at least one module which is repeated in succession over the entire circumferential extent of said tread band,
- each module is divided by said equatorial plane into a first region, which extends from said equatorial plane up to said first lateral edge, and a second region, which extends from said equatorial plane up to said second lateral edge,
- there is identified among said modules a plurality of first groups of adjacent modules, which comprise at least 40% of the total of said modules and in which the number of studs collectively provided in said first region is equal to the number of studs collectively provided in said second region,
and wherein:
- there is defined between the studs of each of said first groups of adjacent modules provided on said first region a first ranking of distance of the studs from said equatorial plane,
- there is defined between the studs of each of said first groups of adjacent modules provided on said second region a second ranking of distance of the studs from said equatorial plane,
- at least 40% of said first groups of adjacent modules comprise at least two studs having mutually consecutive positions within said first ranking or said second ranking, which are provided one on a first module of said group of adjacent modules and the other on a second module of said group of adjacent modules, adjacent to said first module.

As a result of these features, a studded tyre implemented in accordance with the third or the fourth aspect has optimum performance in terms of road-holding (meaning both the acceleration and braking period and the turning period) and in terms of noise.

Indeed, as stated above, the Applicant verified that to achieve uniform, consistent performance on an icy surface it is desirable to have as constant a number of studs as possible in the footprint area during the rolling of the tyre on the road surface and that to achieve noise values for the tyre which are as low as possible the studs have to be arranged on the tread band in such a way that the striking of the studs on the road surface produces a noise distributed over as wide a frequency spectrum as possible, so as to prevent intensity peaks at particular frequencies to which the human ear is particularly sensitive.

Further, as stated above, the Applicant did however find that the responses to said requirements, considered individually, may conflict with one another, in particular if the number of studs to be provided on the tread band is particularly high, for example greater than 150.

The Applicant observed that in a tyre, even without studs, the sequence of the pitches, understood both as a sequence of the lengths of single-pitch modules (in other words modules in which the sub-module is identical to the module) and as a sequence of sub-modules of different circumferential extent (in a module comprising at least two sub-modules), is generally optimised by distributing the noise produced by the impact of the blocks on the road surface over as wide a frequency spectrum as possible.

This is generally achieved by introducing a random or pseudorandom component into the sequence of the pitches as defined above, in other words preventing sequences of pitches of the same length insofar as possible so as to prevent the initiation of resonances and the formation of potential high-intensity peaks at some frequencies. Ultimately, this makes it possible to distribute the sound energy produced by the rolling tyre over a wider frequency spectrum.

The Applicant did however find that in a studded tyre the above-described effect of distributing the energy over the widest possible frequency spectra is also highly dependent on the distribution of the studs, as well as on the sequence of the pitches.

The Applicant thus found that it is not actually sufficient to arrange the studs unthinkingly in a central zone of the blocks so as automatically to enjoy the above-described optimisation of the sequence of pitches, but rather it is necessary to add a further random or pseudorandom component to the distribution of the studs with respect to the underlying tread pattern.

The Applicant further realised that preferably said further random component in the distribution of the studs may advantageously be added independently and differently in the first and in the second tread band region respectively, as divided by the equatorial plane.

In this way, the frequency spectrum produced by the impact of the first region will be different from, albeit partially overlapping with, that produced by the second region.

In particular, in a module having two sub-modules (two-pitch modules) as defined above, the addition of said random or pseudorandom component to the distribution of the studs is implemented by suitably distributing the studs of the first or second region over different elementary portions of the same module.

Further, said superposition of the random or pseudorandom arrangement of the studs on the random or pseudorandom arrangement of the sequence of the pitches is found to be particularly effective in terms of noise reduction in the first modules (or in the first groups of adjacent modules) having a number of studs evenly distributed between the first and the second tread band region.

The present invention, in at least one of the aforementioned third and fourth aspects, may have at least one of the further preferred features set out hereinafter.

Preferably, in at least 40% of said two-pitch modules, at least one stud of said first or second region is provided on an elementary portion of said module different from that in which all the other studs of said first or second region are arranged.

Preferably, at least 40% of said modules comprise at least two studs having mutually consecutive positions within said first ranking, which are provided one on said first elementary portion and the other on said second elementary portion, as well as at least two studs having mutually consecutive positions within said second ranking, which are provided one on said first elementary portion and the other on said second elementary portion.

Preferably, at least 40% of said modules comprise at least three studs having mutually consecutive positions within said first ranking or said second ranking, which are provided alternately on said first elementary portion and on said second elementary portion.

Preferably, at least 40% of said modules comprise at least three studs having mutually consecutive positions within said first ranking, which are provided alternately on said first elementary portion and on said second elementary portion, as well as at least three studs having mutually consecutive positions within said second ranking, which are provided alternately on said first elementary portion and on said second elementary portion.

Preferably, the stud having the highest position in said first ranking among said at least three studs is provided in one of said first and second elementary portions and the stud having the highest position in said second ranking among said at least three studs is provided in the other of said first and second elementary portions.

Preferably, in at least 40% of said modules, all the studs having mutually consecutive positions within said first ranking or said second ranking are provided alternately on said first elementary portion and on said second elementary portion.

Preferably, at least 40% of said modules, more preferably at least 50% of said modules, comprise three studs in said first region, of which the studs in the first and third position in said first ranking are provided on said first elementary portion and the stud in the second position in said first ranking is provided on said second elementary portion, as well as three studs in said second region, of which the studs in the first and third position in said second ranking are provided on said second elementary portion and the stud in the second position in said second ranking is provided on said first elementary portion.

In this way, in the two tread band regions, studs are obtained arranged in a triangle having various configurations which make it possible to add a further component of randomness or pseudorandomness to the distribution of the studs in the first and in the second region, within individual modules and/or groups of adjacent modules.

Further, in at least one of said third and fourth aspects, the present invention may have at least one of the preferred features set out above in reference to the first and second aspect.

In a further aspect thereof, the present invention relates to a set of tyres comprising at least two tyres in accordance with the first aspect having different diameters and a substantially identical tread pattern.

Preferably, each tyre of said set comprises a different total number of modules from the other tyres.

Preferably, the tyres having a greater total number of modules have a lower fraction of first modules.

In one embodiment, a tyre of said set has 32 modules, and said fraction of first modules is between 65% and 75% and is preferably approximately 68%.

In one embodiment, a tyre of said set has 33 modules, and said fraction of first modules is between 40% and 60% and is preferably approximately 51%.

The features and advantages of the invention will be more clearly apparent from the detailed description of some preferred embodiments thereof, illustrated by way of non-limiting example with reference to the accompanying drawings, in which:

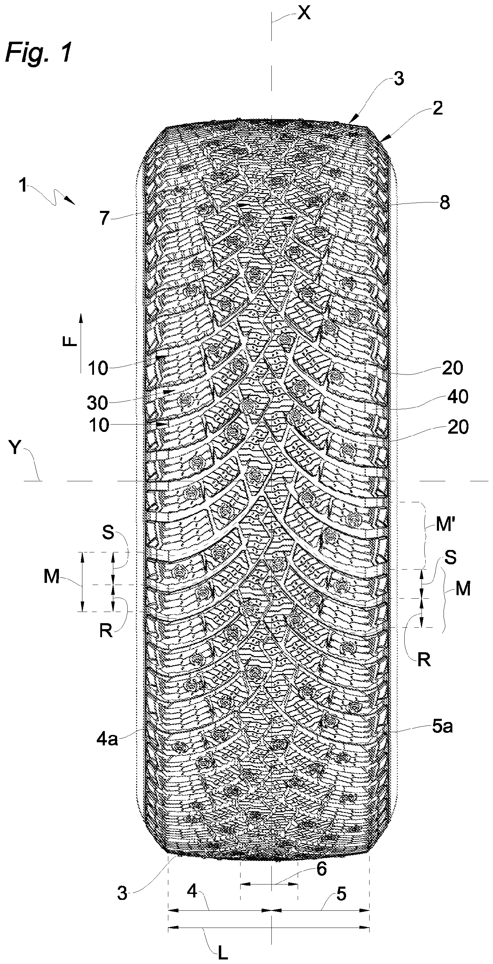

- Fig. 1 is a front perspective view of an example of studded tyre for vehicle wheels realised in accordance with the present invention;
- Fig. 2 is a schematic view on an enlarged scale of a significant portion of the tread band of the studded tyre of Fig. 1,
- Fig. 3 is a schematic view on an enlarged scale of a first module of the tread band of the studded tyre of Fig. 1.

Referring to the appended drawings, 1 denotes as a whole a studded tyre for vehicle wheels realised in accordance with the present invention.

The studded tyre 1 comprises a tyre structure which is conventional per se, not shown in the appended drawings, as well as a tread band 2 on which there is defined a tread surface 3 which is arranged in a position radially external to the tread band 2 and intended for contact with a road surface.

The tyre 1 has a conventional general toroidal shape formed about an axis of rotation, defining on the tread surface 3 an axial direction Y parallel thereto and passed through by an equatorial plane X, perpendicular to the axis of rotation and defining on the tread band 3 a circumferential direction parallel thereto.

The studded tyre 1 has a nominal section width of approximately 205 mm with a rim diameter of 16 inches.

On the tread band 2, an effective width L is identified, defined as the maximum width of the tread band intended for contact with the ground in standard usage conditions and extending between a first lateral edge 4a and a second lateral edge 5a, axially opposite the first lateral edge 4a, of the tread band 2.

The tyre 1 is as directional tyre in which a preferential rolling direction of the tyre is defined, indicated by the arrow F in the drawings.

The equatorial plane X divides the tread band 2 into a first region 4, extending from the equatorial plane X up to the first lateral edge 4a, and a second region 5, extending from the equatorial plane X up to the second lateral edge 5a.

On the tread band 2, there is further defined a central region 6, extending straddling the equatorial plane, partially overlapping the first and the second region 4 and 5.

Along the circumferential progression of the central region 6, a plurality of central blocks, denoted 7 and 8, are arranged in regular succession, arranged in pairs.

The central blocks 7 and 8 have a V shape with mutually facing concavities and are partially embedded in one another.

On the tread band 2, there are further defined a plurality of first pairs of main grooves, formed by a first and a second main groove 10 and 20, arranged in regular succession along the circumferential progression of the tread band 2.

Each first main groove 10 extends from the first lateral edge 4a towards the equatorial plane, whilst each second main groove 20 extends from the second lateral edge 5a towards the equatorial plane X.

Each first main groove 10 comprises a first, axially external, segment 11, extending from the first lateral edge 4a and having a curvilinear progression at a decreasing inclination with respect to the circumferential direction, as well as a final, axially internal, segment 12, extending in continuation of the first segment 11 until it opens into a second main groove 20 of a pair of successive main grooves.

The final segment 12 of each first main groove 10 has a zigzag configuration which extends straddling the equatorial plane X.

Each second main groove 20 comprises a first, axially external, segment 21, extending from the second lateral edge 5a and having a curvilinear progression at a decreasing inclination with respect to the circumferential direction until it opens into the first segment 11 of the first main groove 10.

Further, the second main groove 20 is axially offset with respect to the first main groove 10.

On the tread band 2, there are further defined a plurality of second pairs of main grooves, formed by a third and a fourth main groove 30 and 40, arranged in regular succession along the circumferential progression of the tread band 2, in alternating position with the first pairs of main grooves 10 and 20.

Each third main groove 30 extends from the first lateral edge 4a towards the equatorial plane X up to a blind end, internal to the central block 7, whilst each fourth main groove 40 extends from the second lateral edge 5a towards the equatorial plane X up to a blind end, internal to the central block 8.

No third or fourth main groove 30, 40 intersects another first, second, third or fourth main groove.

The third and fourth main grooves 30 and 40 have an analogous curvilinear progression substantially parallel to the first and second main grooves 10 and 20, respectively.

Further, the third and fourth main grooves 30 and 40 are substantially mutually symmetrical about the equatorial plane X, albeit mutually axially offset.

All the first, second, third and fourth main grooves 10, 20, 30 and 40 have a depth of approximately 9 mm, with a variable width, decreasing from the lateral edges 4a, 5a, where it measures approximately 9 - 12 mm, towards the equatorial plane X, where it measures approximately 2.5 - 4 mm.

Further, on the tread band 2, a plurality of first pairs of secondary grooves are formed, formed by a first and a second secondary groove 50 and 60, arranged in regular succession along the circumferential progression of the tread band 2.

Each first secondary groove 50 extends in the first region 4 between two first mutually successive main grooves 10, intersecting a third main groove 30, whilst each second secondary groove 60 extends in the second region 5 between two mutually successive second main grooves 20, intersecting a fourth main groove 40, in a manner substantially mirroring the first secondary groove 50 about the equatorial plane X.

The first and second secondary grooves are substantially rectilinear, inclined with respect to the circumferential direction by an angle of approximately 25°, in discordant manner with respect to the inclination of the first segments 11 and 21 of the first and second main grooves 10, 20 between which they extend.

Further, on the tread 2, there are formed a plurality of second pairs of secondary grooves, formed by a third and a fourth secondary groove 70 and 80, arranged in regular succession along the circumferential progression of the tread band 2.

Each third secondary groove 70 extends in the first region 4 between two mutually successive first main grooves 10, in a manner substantially parallel to the first secondary groove 50, whilst each fourth secondary groove 80 extends in the second region 5 between two mutually successive second main grooves 20, in a manner substantially parallel to a second secondary groove 60.

The above-described grooves also define shoulder blocks 9a and 9b, in addition to the central blocks 7 and 8, on the tread band 2.

The shoulder blocks 9a are delimited by the first and second pairs of main grooves (10, 30 or 20 and 40) as well as by the first and second pairs of secondary grooves (50, 70 or 60 and 80), whilst the shoulder blocks 9b are delimited by the first and second pairs of main grooves (10, 30 or 20 and 40), by the second pairs of secondary grooves (70 or 80) and by the lateral edges of the tread band (4a or 5a).

The blocks and grooves identified above collectively define the tread pattern of the studded tyre 1.

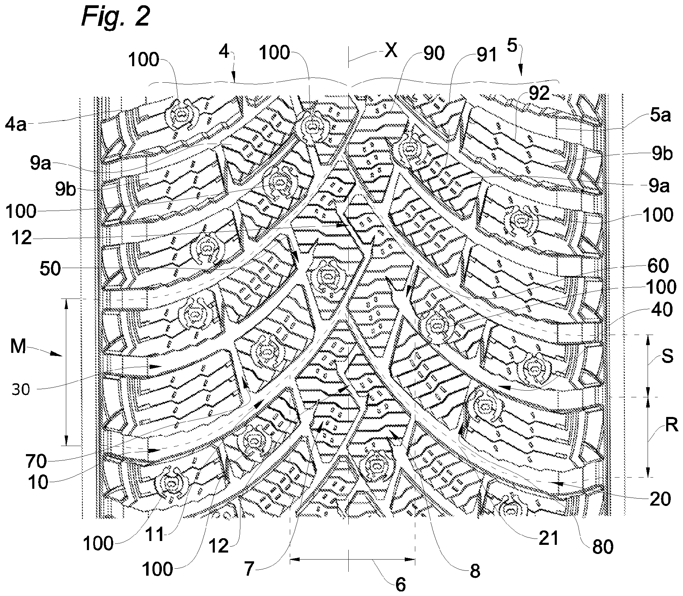

The tread pattern is formed by the repetition in continuous succession of a single module M formed by the portion of tread band comprised between two successive first pairs of main grooves 10 and 20, as is better shown in Fig. 2.

Each module M is in turn formed by a first elementary portion R, extending from a first pair of main grooves 10 and 20 up to the second pair of main grooves 30 and 40, and by a second elementary portion 5, extending from the second pair of main grooves 30 and 40 up to the successive first pair of main grooves 10 and 20.

Each first elementary portion R and each second elementary portion 5 may have a circumferential dimension corresponding to a long pitch or of an extent which corresponds to a short pitch, which is less than said long pitch.

In particular, the long pitch extends approximately 30% further than the short pitch.

Each module M may be formed by a first and a second elementary portion having a short pitch or a long pitch variously combined with one another, in such a way that on the tread pattern there are provided modules having both the first and the second elementary portion having a long pitch, identified hereinafter as modules M1 (not shown in the figures), or modules having both the first and the second elementary portion having a short pitch, identified hereinafter as modules M2 (not shown in the figures), or modules having the first elementary portion having a short pitch and the second elementary portion having a long pitch, identified hereinafter as modules M3 (not shown in the figures), or, finally, modules having the first elementary portion having a long pitch and the second elementary portion having a short pitch, identified hereinafter as modules M4 (not shown in the figures).

Overall, 32 modules are arranged on the tread band 2 in a semi-random succession aimed at minimising the noise produced by the tread pattern.

In particular, 4 modules M1, 12 modules M2, 7 modules M3 and 9 modules M4 are present on the tread band 2.

Within the sequence of modules, some pairs of adjacent modules M2 may also be identified.

On all the central blocks 7, 8 and shoulder blocks 9a and 9b, sipes are formed which promote the performance of the tyre in snowy ground conditions.

In particular, sipes extending substantially in the axial direction Y are formed on the first and second blocks 7 and 8, sipes 91 extending in a transverse direction with respect to the prevailing progression direction of the blocks 9a (defined by the direction of the first or second main grooves) are formed on the shoulder blocks 9a, and sipes 92 extending in a direction substantially parallel to the prevailing progression direction of the blocks 9b (this too being defined by the direction of the first or second main grooves) are formed on the shoulder blocks 9b.

On the central blocks 7, 8 and shoulder blocks 9a and 9b, a plurality of studs 100 are further provided in the manners described hereinafter.

In particular, 190 studs are provided on the tread band 2 overall.

The studs 100 are provided on the blocks of the tread band at circumferential tracks defined symmetrically on the first and second region 4 and 5 at predefined distances from the equatorial plane X.

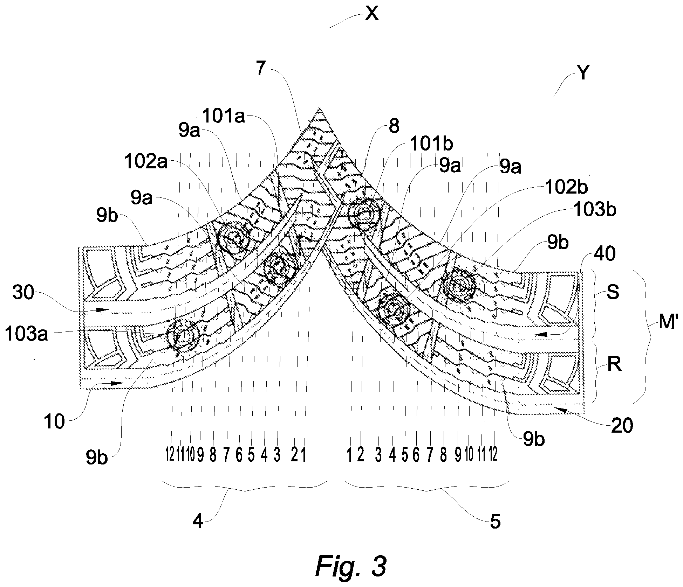

In particular, on each first and second region 4 and 5, 12 circumferential tracks are defined on which the studs 100 may be provided, by way of example 2 circumferential tracks affecting the central block 7 or 8, 5 circumferential tracks affecting the shoulder blocks 9a, and 5 circumferential tracks affecting the shoulder blocks 9b (see Fig. 3).

Preferably, the distance between one circumferential track and another is at least 5 mm, and the distance from the equatorial plane X of the circumferential track nearest thereto is at least 9 mm.

For each module, a predefined number of studs equal to 6, the integer best approximating the need to provide 190 studs on 32 modules in a balanced manner, are provided.

Among the modules M, there are identified a plurality of first modules M' in which the number of studs provided on the first region 4 is equal to the number of studs provided on the second region 5.

In particular these first modules M' comprise all the modules M3 and M4 as well as a significant part of the modules M2, so as to represent approximately 68% of the modules M.

In all the first modules M', 6 studs are provided, 3 of these in the first region 4 and 3 in the second region 5.

In all the modules M1, however, 7 studs are provided, one more than the predefined number set out above.

Further, in some modules M2, 5 studs are provided, one less than the predefined number set out above.

In particular, in each pair of mutually adjacent modules M2, 5 studs are provided in one of the two modules M2.

In each first module M', the studs provided on the first region 4 are positioned on different circumferential tracks, so as to have different distances from one another from the equatorial plane X. This makes it possible to define a first ranking of studs based on the distance from the equatorial plane X. In particular, in the first region 4 there are defined a first internal stud 101a, defined as the stud of the first region 4 nearest the equatorial plane X, a first intermediate stud 102a, defined as the stud of the first region 4 at an intermediate distance from the equatorial plane X, and a first external stud 103a, defined as the stud of the first region 4 furthest from the equatorial plane X.

Analogously, the studs provided on the second region 5 are also positioned on different circumferential tracks, so as to have different distances from one another from the equatorial plane X. This makes it possible to define a second ranking of studs based on the distance thereof from the equatorial plane X. In particular, in the second region 5 there are defined a second internal stud 101b, defined as the stud of the second region 5 nearest the equatorial plane X, a second intermediate stud 102b, defined as the stud of the second region 5 at an intermediate distance from the equatorial plane X, and a second external stud 103b, defined as the stud of the second region 5 furthest from the equatorial plane X.

The studs of each first module M' form pairs of homologous studs, consisting of studs of the first and second region 4, 5 which occupy the same position in the first and the second ranking respectively. Thus, the pairs of homologous studs are formed by the first and second internal studs 101a and 101b (defined as the first pair of homologous studs), by the first and second intermediate studs 102a and 102b (defined as the second pair of homologous studs), and also by the first and second external studs 103a and 103b (defined as the third pair of homologous studs).

All the studs of the each first module M' are provided so as to be mutually misaligned with respect to the axial direction Y.

Further, in each first module M', the circumferential tracks on which the studs provided on the first region 4 are positioned are different from the circumferential tracks on which the studs provided on the second region 5 are positioned, in such a way that all the studs, in particular the studs of each pair of homologous studs, are positioned at different distances from the equatorial plane X.

In addition, only one of the first internal stud 101a and the second internal stud 101b is provided on the central blocks 7, 8 of each first module, the other meanwhile being positioned on a shoulder block 9a.

Further, in a fraction of first modules M', if a stud of the second pair of homologous studs 102a, 102b or of the third pair of homologous studs 103a, 103b is provided on the first elementary portion R, the other stud of the same pair of homologous studs is provided on the second elementary portion S.

In particular, this fraction of first modules M' forms approximately 27% of the total of the first modules M', of which approximately half (thus approximately 13% of the total first modules M') have both the pairs of homologous studs 102a, 102b and 103a, 103b with one stud provided on the first elementary portion R and the other stud provided on the second elementary portion S.

In further embodiments of the present invention, not shown in the appended drawings, the studded tyres have different diameters and therefore a different overall number of modules M.

These studded tyres have substantially the same tyre tread pattern, with some differences in the positioning configuration of the studs, including, in particular, a different fraction of first modules M' with respect to the total number of modules provided on the tread band.

In particular, this fraction decreases as the overall number of modules forming the tread band increases, or in other words as the diameter of the tyre increases. For example, in a tyre having 33 modules M overall, on which 192 studs are provided, a fraction of first modules M' of approximately 51% is provided.

### EXAMPLE

A studded tyre of size 205/55 R16, equipped with 190 studs, was produced as described above and was subjected to a noise test, comparing it with a studded tyre of the same dimensions, produced by the same Applicant, but on which only 130 studs are provided.

In particular, the noise test was carried out by fitting the set of tyres to be analysed on a Volkswagen Golf and measuring the noise inside the vehicle in four positions, of which two substantially correspond to the driver's ears (denoted "Front left" and "Front right" respectively) and two substantially correspond to the ears of a passenger positioned in the centre of the rear seat (denoted "Rear left" and "Rear right" respectively).

The noise measurements were taken by scanning the entire frequency spectrum and subsequently integrated to define a mean value.

Further, the noise measurements were taken at two different speeds, of 60 km/h and 80 km/h respectively, under two different travel conditions, at constant speed and in inertial ("coast down") travel conditions.

The results of the measurements are summarised in Table 1 below, in which each column sets out the noise intensity (measured in decibels) integrated over the entire frequency spectrum, measured inside the passenger compartment in the aforementioned positions when the tyres according to the invention (INV) were fitted and when the comparison tyres (REF) were fitted on the car.

**Table 1**

| Microphone position | Front left | | Front right | | Rear left | | Rear right | |
|---|---|---|---|---|---|---|---|---|
| Tyres | INV | REF | INV | REF | INV | REF | INV | REF |
| Constant speed of 60 km/h | 70.3 | 72.0 | 67.2 | 68.5 | 70.3 | 71.8 | 69.8 | 71.4 |
| Constant speed of 80 km/h | 71.9 | 73.8 | 68.8 | 70.2 | 71.8 | 73.2 | 71.8 | 72.9 |
| Inertial travel at 60 km/h | 70.2 | 74.0 | 67.2 | 70.4 | 70.3 | 73.6 | 70.2 | 73.1 |
| Inertial travel at 80 km/h | 72.6 | 73.4 | 69.4 | 70.7 | 72.5 | 73.4 | 72.3 | 73.4 |

The analysis of the results shows how the noise produced by the tyre according to the invention is less than that recorded from the comparison tyre under all conditions tested. This result is particularly surprising considering that the studded tyre according to the invention has 190 studs as against the 130 of the comparison tyre, meaning almost 50% more studs.

The tyre implemented according to the invention was further subjected to various traction and turning tests on an icy road surface and tests of wear on the asphalted road surface, in accordance with internationally recognised testing parameters.

The results of the tests showed how the tyre of the present invention offers excellent performance in terms of acceleration and braking and in terms of road-holding during turning.

Finally, the level of wear on the road pavement met the requirements prescribed by the tests.

## Claims

1. Studded tyre comprising a tread band (2) which extends between a first lateral edge (4a) and a second lateral edge (5a), which are axially opposite each other, an equatorial plane (X) extending through said tread band, respective pluralities of grooves and blocks which collectively define a tread pattern of said tyre being formed on said tread band, wherein:
- there is identified in said tread pattern at least one module (M) which extends between opposite axial ends of said tread band and which is the minimum portion of tread band the configuration of which is repeated in succession over the entire circumferential extent of said tread band to form said tread pattern,
- each module (M) comprises a first and a second elementary portion (R, S) of said tread band, which extend between said axial ends of the tread band and are arranged in the same succession within each module, each of said first and second elementary portions extending independently in a circumferential direction by an extent which corresponds to a long pitch or by an extent which corresponds to a short pitch, which is less than said long pitch,
- each module (M) is divided by said equatorial plane into a first region (4), which extends from said equatorial plane up to said first lateral edge (4a), and a second region (5), which extends from said equatorial plane up to said second lateral edge (5a),
- there are identified among said modules a plurality of first modules (M') which comprise at least 40% of the total of said modules, the number of studs provided in said first region (4) of said first module (M') being equal to the number of studs provided in said second region (5) of said first module (M'),
- said studs are arranged in said first modules so as to be mutually misaligned with respect to an axial direction (Y), perpendicular to said equatorial plane,
- there is defined between the studs of said first region (4) a first ranking of distance of the studs from said equatorial plane,
- there is defined between the studs of said second region (5) a second ranking of distance of the studs from said equatorial plane,
- there are defined pairs of homologous studs which are formed by a stud (101a, 102a, 103a) of said first region (4) and by a stud (101b, 102b, 103b) of said second region (5) having the same position in said first ranking and, respectively, in said second ranking,
- at least 20% of said first modules (M') comprise at least one pair of homologous studs in which one stud is provided on said first elementary portion (R) and the other stud is provided on said second elementary portion (5).

2. Studded tyre according to claim 1, wherein in at least 10% of said first modules (M') each pair of homologous studs comprises a stud provided on said first elementary portion and the other stud provided on said second elementary portion.

3. Studded tyre according to claim 1 or claim 2, wherein for each first module (M'), if both the studs of a pair of homologous studs are provided on one of said first and second elementary portions, said studs are positioned at different distances from said equatorial plane (X).

4. Studded tyre according to claim 2 or claim 3, wherein there is defined in said first modules a first pair of homologous studs which is formed by a first internal stud (101a), which is defined as the stud provided in said first region (4) nearest said equatorial plane, and by a second internal stud (101b), which is defined as the stud provided in said second region (5) nearest said equatorial plane, and wherein said first internal stud is spaced apart from said equatorial plane by a different distance from said second internal stud.

5. Studded tyre according to any one of the preceding claims, wherein, in said first modules (M'), all the studs provided in said first region (4) are positioned at different distances from said equatorial plane with respect to the studs provided in said second region (5).

6. Studded tyre according to any one of the preceding claims, wherein, in said first modules, there are more than two studs provided in said first region (4).

7. Studded tyre according to any one of the preceding claims, wherein there are formed on said tread band a plurality of central blocks (7, 8) through which said equatorial plane extends and, in said first modules, only one of said first internal stud (101a) and said second internal studs (101b) is provided on said central blocks.

8. Studded tyre according to any one of the preceding claims, wherein said first modules (M') are at least 65% of the total of said modules (M).

9. Studded tyre according to any one of the preceding claims, wherein, in said first modules, the total number of the studs which are provided in said first region and in said second region is constant and equal to a predefined number, which, preferably, is 6.

10. Studded tyre according to claim 9, wherein, in the modules in which the number of studs provided in said first region of said first module is not equal to the number of studs provided in said second region, there is provided a number of studs equal to said predefined number increased or decreased by one.

11. Studded tyre comprising a tread band which extends between a first lateral edge (4a) and a second lateral edge (5a), which are axially opposite each other, an equatorial plane (X) extending through said tread band, respective pluralities of grooves and blocks which collectively define a tread pattern of said tyre being formed on said tread band, wherein:
- there is identified in said tread pattern at least one module (M) which extends between opposite axial ends of said tread band and which is the minimum portion of tread band the configuration of which is repeated in succession over the entire circumferential extent of said tread band to form said tread pattern,
- each module is divided by said equatorial plane into a first region (4), which extends from said equatorial plane up to said first lateral edge (4a), and a second region (5), which extends from said equatorial plane up to said second lateral edge (5a),
- there is identified among said modules a plurality of first groups of adjacent modules, which comprise at least 40% of the total of said modules and in which the number of studs collectively provided in said first region (4) is equal to the number of studs collectively provided in said second region (5),
- said studs are provided in said first groups of adjacent modules so as to be mutually misaligned with respect to an axial direction (Y), perpendicular to said equatorial plane, and
- there is defined between the studs of each of said first groups of adjacent modules provided in said first region (4) a first ranking of distance of the studs from said equatorial plane,
- there is defined between the studs of each of said first groups of adjacent modules provided in said second region (5) a second ranking of distance of the studs from said equatorial plane,
- there are defined in each of said first groups of adjacent modules pairs of homologous studs which are formed by a stud provided in said first region (4) and by a stud provided in said second region (5) having the same position in said first ranking and in said second ranking respectively,
- at least 20% of said first groups of adjacent modules comprise at least one pair of homologous studs in which one stud is provided on a first module of said group of adjacent modules and the other stud is provided on a second module of said group of adjacent modules, adjacent to said first module.

12. Studded tyre according to claim 11, wherein there is identified in each of said first groups of adjacent modules a first internal stud (101a), which is defined as the stud provided in said first region (4) nearest said equatorial plane, and a second internal stud (101b), which is defined as the stud provided in said second region (5) nearest said equatorial plane, and wherein said first internal stud is spaced apart from said equatorial plane by a different extent from said second internal stud.

13. Studded tyre according to claim 11 or claim 12, wherein each of said first groups of adjacent modules is formed by two adjacent modules.

14. Studded tyre according to any one of claims 11 to 13, wherein, in each of said first groups of adjacent modules, all the studs provided in said first region (4) are positioned at different distances from said equatorial plane with respect to the studs provided in said second region (5).

15. Studded tyre according to any one of the preceding claims, wherein at least 150 studs are provided on said tread band (2).

## Patentansprüche

1. Spikereifen, umfassend ein Laufflächenband (2), das sich zwischen einer ersten Seitenkante (4a) und einer zweiten Seitenkante (5a) erstreckt, die einander axial gegenüberliegen, wobei eine Äquatorialebene (X) durch das Laufflächenband verläuft, wobei jeweilige Mehrzahlen von Rillen und Blöcken, die zusammen ein Laufflächenmuster des Reifens definieren, auf dem Laufflächenband ausgebildet sind, wobei:
- im Laufflächenmuster mindestens ein Modul (M) identifiziert ist, das sich zwischen gegenüberliegenden axialen Enden des Laufflächenbandes erstreckt und der kleinste Laufflächenbandabschnitt ist, dessen Konfiguration über die gesamte umfängliche Erstreckung des Laufflächenbandes in Aufeinanderfolge wiederholt wird, um das Laufflächenmuster zu bilden,
- jedes Modul (M) einen ersten und einen zweiten elementaren Abschnitt (R, S) des Laufflächenbandes umfasst, die sich zwischen den axialen Enden des Laufflächenbandes erstrecken und in der gleichen Aufeinanderfolge innerhalb jedes Moduls angeordnet sind, wobei jeder der ersten und zweiten elementaren Abschnitte sich unabhängig um ein Maß, das einem langen Pitch entspricht, oder um ein Maß, das einem kurzen Pitch entspricht, der kürzer als der erste Pitch ist, in einer Umfangsrichtung erstreckt,
- jedes Modul (M) durch die Äquatorialebene in eine erste Region (4), die sich von der Äquatorialebene bis zur ersten Seitenkante (4a) erstreckt, und eine zweite Region (5) geteilt ist, die sich von der Äquatorialebene bis zur zweiten Seitenkante (5a) erstreckt,
- unter den Modulen eine Mehrzahl von ersten Modulen (M') identifiziert ist, die mindestens 40 % der Gesamtheit der Module umfasst, wobei die Anzahl von Spikes, die in der ersten Region (4) des ersten Moduls (M') vorgesehen ist, gleich der Anzahl von Spikes ist, die in der zweiten Region (5) des ersten Moduls (M') vorgesehen ist,
- die Spikes in den ersten Modulen so angeordnet sind, dass sie in Bezug auf eine axiale Richtung (Y) senkrecht zur Äquatorialebene (Y) voneinander versetzt sind,
- zwischen den Spikes der ersten Region (4) eine erste Abstandsrangfolge der Spikes von der Äquatorialebene definiert ist,
- zwischen den Spikes der zweiten Region (5) eine zweite Abstandsrangfolge der Spikes von der Äquatorialebene definiert ist,
- Paare von homologen Spikes definiert sind, die durch einen Spike (101a, 102a, 103a) der ersten Region (4) und einen Spike (101b, 102b, 103b) der zweiten Region (5) mit der gleichen Position in der ersten Rangfolge bzw. in der zweiten Rangfolge ausgebildet sind,
- mindestens 20 % der ersten Module (M') mindestens ein Paar von homologen Spikes umfassen, wobei ein Spike auf dem ersten elementaren Abschnitt (R) vorgesehen ist und der andere Spike auf dem zweiten elementaren Abschnitt (S) vorgesehen ist.

2. Spikereifen nach Anspruch 1, wobei in mindestens 10 % der ersten Module (M') jedes Paar von homologen Spikes einen Spike auf dem ersten elementaren Abschnitt vorgesehen und den anderen Spike auf dem zweiten elementaren Abschnitt vorgesehen umfasst.

3. Spikereifen nach Anspruch 1 oder 2, wobei die Spikes für jedes erste Modul (M'), falls beide der Spikes des Paares von homologen Spikes auf einem der ersten und zweiten elementaren Abschnitte vorgesehen sind, in unterschiedlichen Abständen von der Äquatorialebene (X) positioniert sind.

4. Spikereifen nach Anspruch 2 oder 3, wobei in den ersten Modulen ein erstes Paar von homologen Spikes definiert ist, das durch einen ersten inneren Spike (101a), der als der Spike definiert ist, der in der ersten Region (4) am nächsten zur Äquatorialebene vorgesehen ist, und durch einen zweiten inneren Spike (101b) ausgebildet ist, der als der Spike definiert ist, der in der zweiten Region (5) am nächsten zur Äquatorialebene vorgesehen ist, und wobei der erste innere Spike von der Äquatorialebene um einen vom zweiten inneren Spike verschiedenen Abstand beabstandet ist.

5. Spikereifen nach einem der vorhergehenden Ansprüche, wobei in den ersten Modulen (M') alle in der ersten Region (4) vorgesehenen Spikes in unterschiedlichen Abständen von der Äquatorialebene in Bezug auf die in der zweiten Region (5) vorgesehenen Spikes positioniert sind.

6. Spikereifen nach einem der vorhergehenden Ansprüche, wobei in den ersten Modulen mehr als zwei Spikes in der ersten Region (4) vorgesehen sind.

7. Spikereifen nach einem der vorhergehenden Ansprüche, wobei auf dem Laufflächenband eine Mehrzahl von zentralen Blöcken (7, 8) ausgebildet ist, durch die die Äquatorialebene verläuft, und in den ersten Modulen nur der erste innere Spike (101a) und der zweite innere Spike (101b) auf den zentralen Blöcken vorgesehen sind.

8. Spikereifen nach einem der vorhergehenden Ansprüche, wobei die ersten Module (M') mindestens 65 % der Gesamtheit der Module (M) sind.

9. Spikereifen nach einem der vorhergehenden Ansprüche, wobei in den ersten Modulen die Gesamtanzahl der Spikes, die in der ersten Region und in der zweiten Region vorgesehen ist, konstant und gleich einer vordefinierten Anzahl ist, die vorzugsweise 6 beträgt.

10. Spikereifen nach Anspruch 9, wobei in den Modulen, in denen die Anzahl von Spikes, die in der ersten Region des ersten Moduls vorgesehen ist, nicht gleich der Anzahl von Spikes ist, die in der zweiten Region vorgesehen ist, wobei eine Anzahl von Spikes vorgesehen ist, die gleich der vordefinierten Anzahl erhöht oder verringert um eins ist.

11. Spikereifen, umfassend ein Laufflächenband, das sich zwischen einer ersten Seitenkante (4a) und einer zweiten Seitenkante (5a) erstreckt, die einander axial gegenüberliegen, wobei eine Äquatorialebene (X) durch das Laufflächenband verläuft, wobei jeweilige Mehrzahlen von Rillen und Blöcken, die zusammen ein Laufflächenmuster des Reifens definieren, auf dem Laufflächenband ausgebildet sind, wobei:
- im Laufflächenmuster mindestens ein Modul (M) identifiziert ist, das sich zwischen gegenüberliegenden axialen Enden des Laufflächenbandes erstreckt und der kleinste Laufflächenbandabschnitt ist, dessen Konfiguration über die gesamte umfängliche Erstreckung des Laufflächenbandes in Aufeinanderfolge wiederholt wird, um das Laufflächenmuster zu bilden,
- jedes Modul durch die Äquatorialebene in eine erste Region (4), die sich von der Äquatorialebene bis zur ersten Seitenkante (4a) erstreckt, und eine zweite Region (5) geteilt ist, die sich von der Äquatorialebene bis zur zweiten Seitenkante (5a) erstreckt,
- unter den Modulen eine Mehrzahl von ersten Gruppen von benachbarten Module identifiziert ist, die mindestens 40 % der Gesamtheit der Module umfasst und die Anzahl von Spikes, die in der ersten Region (4) des ersten Moduls (M') insgesamt vorgesehen ist, gleich der Anzahl von Spikes ist, die in der zweiten Region (5) insgesamt vorgesehen ist,
- die Spikes in den ersten Gruppen von benachbarten Modulen so vorgesehen sind, dass sie in Bezug auf eine axiale Richtung (Y) senkrecht zur Äquatorialebene (Y) voneinander versetzt sind,
- zwischen den Spikes jeder der ersten Gruppen von benachbarten Modulen, die in der ersten Region (4) vorgesehen sind, eine erste Abstandsrangfolge der Spikes von der Äquatorialebene definiert ist,
- zwischen den Spikes jeder der ersten Gruppen von benachbarten Modulen, die in der zweiten Region (5) vorgesehen sind, eine zweite Abstandsrangfolge der Spikes von der Äquatorialebene definiert ist,
- in jeder der ersten Gruppen von benachbarten Modulen Paare von homologen Spikes definiert sind, die durch einen in der ersten Region (4) vorgesehenen Spike und durch einen in der zweiten Region (5) Spike mit der gleichen Position in der ersten Rangfolge bzw. in der zweiten Rangfolge ausgebildet sind,
- mindestens 20 % der ersten Gruppen von benachbarten Modulen mindestens ein Paar von homologen Spikes umfassen, wobei ein Spike auf einem ersten Modul der Gruppe von benachbarten Modulen vorgesehen ist und der andere Spike auf einem zum ersten Modul benachbarten zweiten Modul der Gruppe von benachbarten Modulen vorgesehen ist.

12. Spikereifen nach Anspruch 11, wobei in jeder der ersten Gruppen von benachbarten Modulen ein erster innerer Spike (101a), der als der Spike definiert ist, der in der ersten Region (4) am nächsten zur Äquatorialebene vorgesehen ist, und ein zweiter innerer Spike (101b) identifiziert ist, der als der Spike definiert ist, der in der zweiten Region (5) am nächsten zur Äquatorialebene vorgesehen ist, und wobei der erste innere Spike von der Äquatorialebene um einen vom zweiten inneren Spike verschiedenen Abstand beabstandet ist.

13. Spikereifen nach Anspruch 11 oder 12, wobei jede der ersten Gruppe von benachbarten Modulen durch zwei benachbarte Module ausgebildet ist.

14. Spikereifen nach einem der Ansprüche 11 bis 13, wobei in jeder der ersten Gruppen von benachbarten Modulen alle in der ersten Region (4) vorgesehenen Spikes in unterschiedlichen Abständen von der Äquatorialebene in Bezug auf die in der zweiten Region (5) vorgesehenen Spikes positioniert sind

15. Spikereifen nach einem der vorhergehenden Ansprüche, wobei mindestens 150 Spikes auf dem Laufflächenband (2) vorgesehen sind.

## Revendications

1. Pneu à crampons comprenant une bande de roulement (2) qui s'étend entre un premier bord latéral (4a) et un deuxième bord latéral (5a), qui sont axialement opposés l'un à l'autre, un plan équatorial (X) s'étendant à travers ladite bande de roulement, des pluralités respectives de rainures et de pavés qui définissent collectivement une sculpture dudit pneu étant formée sur ladite bande de roulement, dans lequel :
- dans ladite sculpture au moins un module (M) qui s'étend entre des extrémités axiales opposées de ladite bande de roulement et qui constitue la partie minimale de bande de roulement dont la configuration est répétée successivement sur toute l'étendue circonférentielle de ladite bande de roulement pour former ladite sculpture est identifié,
- chaque module (M) comprend une première et une deuxième partie élémentaire (R, S) de ladite bande de roulement, qui s'étendent entre lesdites extrémités axiales de la bande de roulement et sont agencées dans la même succession dans chaque module, chacune desdites première et deuxièmes parties élémentaires s'étendant indépendamment selon une direction circonférentielle sur une étendue correspondant à un pas long ou sur une étendue correspondant à un pas court, inférieur audit pas long,
- chaque module (M) est divisé par ledit plan équatorial en une première région (4), qui s'étend dudit plan équatorial jusqu'audit premier bord latéral (4a), et une deuxième région (5), qui s'étend dudit plan équatorial jusqu'audit deuxième bord latéral (5a),
- parmi lesdits modules une pluralité de premiers modules (M') qui comprennent au moins 40% du total desdits modules sont identifiés, le nombre de crampons prévus dans ladite première région (4) dudit premier module (M') étant égal au nombre de crampons prévus dans ladite deuxième région (5) dudit premier module (M'),
- lesdits crampons sont agencés dans lesdits premiers modules de manière à être mutuellement désalignés par rapport à une direction axiale (Y), perpendiculaire audit plan équatorial,
- un premier classement de distance des crampons par rapport audit plan équatorial est défini entre les crampons de ladite première région,
- un deuxième classement de distance des crampons par rapport audit plan équatorial est défini entre les crampons de ladite deuxième région (5),
- des paires de crampons homologues qui sont formées par un crampon (101a, 102a, 103a) de ladite première région (4) et par un crampon (101b, 102b, 103b) de ladite deuxième région (5) ayant la même position dans ledit premier classement et, respectivement, dans ledit deuxième classement sont définies,
- au moins 20% desdits premiers modules (M') comprennent au moins une paire de crampons homologues dont un crampon est prévu sur ladite première partie élémentaire (R) et l'autre crampon est prévu sur ladite deuxième partie élémentaire (S).

2. Pneu à crampons selon la revendication 1, dans lequel dans au moins 10% desdits premiers modules (M'), chaque paire de crampons homologues comprend un crampon prévu sur ladite première partie élémentaire et l'autre crampon prévu sur ladite deuxième partie élémentaire.

3. Pneu à crampons selon la revendication 1 ou 2, dans lequel pour chaque premier module (M'), si les deux crampons d'une paire de crampons homologues sont prévus sur l'une desdites première et deuxième parties élémentaires, lesdits crampons sont positionnés à des distances différentes dudit plan équatorial (X).

4. Pneu à crampons selon la revendication 2 ou 3, dans lequel dans lesdits premiers modules une première paire de crampons homologues, qui est formée par un premier crampon interne (101a), qui est défini comme le crampon prévu dans ladite première région (4) la plus proche dudit plan équatorial, et par un deuxième crampon interne (101b), qui est défini comme le crampon prévu dans ladite deuxième région (5) la plus proche dudit plan équatorial, est définie, et dans lequel ledit premier crampon interne est espacé dudit plan équatorial d'une distance différente de celle dudit deuxième crampon interne.

5. Pneu à crampons selon l'une quelconque des revendications précédentes, dans lequel, dans lesdits premiers modules (M'), tous les crampons prévus dans ladite première région (4) sont positionnés à des distances différentes dudit plan équatorial par rapport aux crampons prévus dans ladite deuxième région (5).

6. Pneu à crampons selon l'une quelconque des revendications précédentes, dans lequel, dans lesdits premiers modules, il y a plus de deux crampons prévus dans ladite première région (4).

7. Pneu à crampons selon l'une quelconque des revendications précédentes, dans lequel sur ladite bande de roulement, une pluralité de pavés centraux (7, 8) sont formés à travers lesquels s'étend ledit plan équatorial et, dans lesdits premiers modules, un seul desdits premiers crampons internes (101a) et desdits deuxièmes crampons internes (101b) est prévu sur lesdits pavés centraux.

8. Pneu à crampons selon l'une quelconque des revendications précédentes, dans lequel lesdits premiers modules (M') représentent au moins 65% du total desdits modules (M).

9. Pneu à crampons selon l'une quelconque des revendications précédentes, dans lequel, dans lesdits premiers modules, le nombre total des crampons qui sont prévus dans ladite première région et dans ladite deuxième région est constant et égal à un nombre prédéfini, qui, de préférence, vaut 6.

10. Pneu à crampons selon la revendication 9, dans lequel, dans les modules dans lesquels le nombre de crampons prévus dans ladite première région dudit premier module n'est pas égal au nombre de crampons prévus dans ladite deuxième région, un nombre de crampons égal audit nombre prédéfini augmenté ou diminué de un est prévu.

11. Pneu à crampons comprenant une bande de roulement qui s'étend entre un premier bord latéral (4a) et un deuxième bord latéral (5a), qui sont axialement opposés l'un à l'autre, un plan équatorial (X) s'étendant à travers ladite bande de roulement, des pluralités respectives de rainures et de pavés qui définissent collectivement une sculpture dudit pneu étant formée sur ladite bande de roulement, dans lequel :
- dans ladite sculpture au moins un module (M) qui s'étend entre des extrémités axiales opposées de ladite bande de roulement et qui constitue la partie minimale de bande de roulement dont la configuration est répétée successivement sur toute l'étendue circonférentielle de ladite bande de roulement pour former ladite sculpture est identifié,
- chaque module est divisé par ledit plan équatorial en une première région (4), qui s'étend dudit plan équatorial jusqu'audit premier bord latéral (4a), et une deuxième région (5), qui s'étend dudit plan équatorial jusqu'audit deuxième bord latéral (5a),
- parmi lesdits modules une pluralité de premiers groupes de modules adjacents sont identifiés, qui comprennent au moins 40% du total desdits modules et dans lesquels le nombre de crampons prévus collectivement dans ladite première région (4) est égal au nombre de crampons prévus collectivement dans ladite deuxième région (5),
- lesdits crampons sont prévus dans lesdits premiers groupes de modules adjacents de manière à être mutuellement désalignés par rapport à une direction axiale (Y), perpendiculaire audit plan équatorial,
- un premier classement de distance des crampons par rapport audit plan équatorial est défini entre les crampons de chacun desdits premiers groupes de modules adjacents prévus dans ladite première région (4),
- un deuxième classement de distance des crampons par rapport audit plan équatorial est défini entre les crampons de chacun desdits premiers groupes de modules adjacents prévus dans ladite deuxième région (5),
- dans chacun desdits premiers groupes de modules adjacents, des paires de crampons homologues qui sont formées par un crampon prévu dans ladite première région (4) et par un crampon prévu dans ladite deuxième région (5) ayant la même position dans ledit premier classement et, respectivement, dans ledit deuxième classement sont définies,
- au moins 20% desdits premiers groupes de modules adjacents comprennent au moins une paire de crampons homologues, dans laquelle un crampon est prévu sur un premier module dudit groupe de modules adjacents et l'autre crampon est prévu sur un deuxième module dudit groupe de modules adjacents, adjacents audit premier module.

12. Pneu à crampons selon la revendication 11, dans lequel dans chacun desdits premiers groupes de modules adjacents un premier crampon interne (101a), qui est défini comme le crampon prévu dans ladite première région (4) la plus proche dudit plan équatorial, et un deuxième crampon interne (101b), qui est défini comme le crampon prévu dans ladite deuxième région (5) la plus proche dudit plan équatorial sont identifiés, et dans lequel ledit premier crampon interne est espacé dudit plan équatorial d'une étendue différente de celle dudit deuxième crampon interne.

13. Pneu à crampons selon la revendication 11 ou 12, dans lequel chacun desdits premiers groupes de modules adjacents est formé de deux modules adjacents.

14. Pneu à crampons selon l'une quelconque des revendications 11 à 13, dans lequel, dans chacun desdits premiers groupes de modules adjacents, tous les crampons prévus dans ladite première région (4) sont positionnés à des distances différentes dudit plan équatorial par rapport aux crampons prévus dans ladite deuxième région (5).

15. Pneu à crampons selon l'une quelconque des revendications précédentes, dans lequel au moins 150 crampons sont prévus sur ladite bande de roulement (2).
